(19) Europäisches Patentamt

European Patent Office

Office européen des brevets

(11) **EP 1 737 119 A1**

(12) **EUROPEAN PATENT APPLICATION**

(43) Date of publication:
**27.12.2006 Bulletin 2006/52**

(51) Int Cl.:
*H02P 25/02* (2006.01)   *G05D 19/02* (2006.01)
*B65G 27/32* (2006.01)   *H02M 7/525* (2006.01)

(21) Application number: **06009724.3**

(22) Date of filing: **11.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.06.2005 IT MI20051173**

(71) Applicant: **SIMIONATO S.p.A.**
**35035 Mestrino PD (IT)**

(72) Inventor: **Bakker, Jan-Douwe**
**35011 Campodarsego**
**Padova (IT)**

(74) Representative: **Petruzzelli, Antonio**
**C.so Italia, No. 43**
**20122 Milano (IT)**

(54) **Piloting unit, preferably of vibration apparatus**

(57)   A piloting unit, preferably but not exclusively aimed at actuating vibration apparatus (110), of the type comprising means for drawing energy from a source, means for actuating and de-actuating at least one electromagnetic actuator (28) of said apparatus and means for setting the work cycle, characterised in that it also comprises means for indirectly identifying the resonance frequency of the apparatus and for maintaining the vibration frequency close to said resonance frequency.

Fig. 3

EP 1 737 119 A1

## Description

This invention relates to the sector of vibration apparatuses, including also batchers and conveyors. More particularly the present invention relates to a piloting unit of vibration apparatus equipped with means for the command and control of the vibration frequency, and comprising a method for maintaining this vibration frequency.

Vibration apparatuses, such as conveyors or batchers, are used in very many firms for moving from one processing station to another products that differ from each other in terms of shape and weight, or for transporting small mechanical parts, or again for breaking up brittle material of a certain grain size or compacting fine powders, etc. In the preparation of food products, above all, the various ingredients are batched and mixed by means of special multihead vibration batchers. These batchers are complex vibration apparatuses, consisting of several vibrating units arranged in a star shape and converging radially towards a vibrating distribution plate designed to sort the product that falls there over all the radial channels. Once the product is routed onto radial channels, the same channels convey it towards the respective weighing members.

Each of said vibrating units is substantially made up of two parts, typically with different weights and made to vibrate one in relation to the other. One of these parts is commonly referred to as base, while the other part is referred to as transport channel. The actuator is placed between said two parts, for example of an electromagnetic type, whose function is that of making the channel vibrate in relation to the base. The transport channel is generally connected to the base via elastic elements such as, more commonly, a system of leaf springs. The vibration apparatus is then generally placed on a support structure, and is insulated mechanically from the latter by means of suitable shock-absorbing elements, so as to avoid the transfer of power to the support and to the structures connected thereto during operation of the apparatus. At the time when the channel begins to vibrate in relation to the base, therefore, the product placed on the transport channel is pushed forwards at a preset feed rate, depending on the frequency, on the force, on the width and the direction of the vibrations of the channel.

The most important working parameters of vibration apparatuses include in fact the vibration frequency and the width of the oscillations, managed and controlled by an electronic card. A vibration frequency close to the inherent vibration frequency of the apparatus has to be selected so as to minimise the power dissipated by the system on a par with the amplitude of the vibrating unit. This frequency must however be quite far from the inherent vibration frequency of the support structure whereon the apparatus is placed in such a way that stability is guaranteed for the support structure and for the apparatus itself, and there is no transfer, equally damaging and unnecessary, of power to the outside environment.

Despite the advantages brought by the use of vibration apparatuses in areas such as batching and mixing of food ingredients, many vibration batchers and conveyors currently marketed are lacking in a truly effective device for the control of the vibration frequency and width of the oscillations.

The electronic control cards that perform this function can be configured with an open loop, or non-feedbacked, or with a closed loop, in another words feedbacked. In non-feedbacked configurations, for example, the vibration frequency is often controlled by a transformer, or similar means designed to regulate the supply voltage manually. These devices, contrarily, tend to be extremely sensitive to variations in the line frequency, to variations in the load set, to wear, particularly wear of the springs, and other dynamic factors. As a result it is impossible to pilot the vibration apparatus at a frequency very close to its natural resonance frequency. In the feedbacked configurations, however, the vibration conveyors tend to be vibrated at their resonance frequency, and are generally equipped with specific sensors that acquire a feedbacked signal of the width of the oscillations performed. These electronic control cards that have a feedbacked configuration are therefore equipped with complex and costly sensors, based for example on the technology of operational amplifiers of the MOSFET (Metal Oxide Semiconductor Field Effect Transistor) type.

A vibration conveyor equipped with a control device sensitive to the movement of the vibrating unit is known from the document US 4,441,060, said control device comprising a circuit that has an input signal and output signals suitable for actuating the actuators, which circuit supplies the output signals to an extent determined by the same circuit in relation to the width of the oscillations of the vibrating unit and to the value of this width set by the user. More particularly the control device is supplied at a low voltage, lower than 50V, so as to eliminate the safety problems linked to direct use of the mains voltage and the electromagnetic actuator comprises an inductor-transistor circuit which regulates the passage of current from the feeder to the inductor, permitting it or opposing it in relation to the input signal of the transistor, the circuit also comprising means for the recovery of energy, which allow the energy stored in the inductor to return to the source.

The primary object of the present invention is therefore that of providing a piloting unit, preferably but not exclusively aimed at actuating vibration apparatus, equipped with means for the control of the vibration frequency implemented in the electronic card without the use of additional sensors, and which are also able to seek and maintain in the simplest and most effective manner the resonance frequency of the system that determines the maximum width of oscillation of the vibrating unit of the vibration apparatus.

The object of the present invention is also that of providing a piloting unit wherein the electronic calibration of the frequency of oscillation of the vibration apparatuses is immediate.

Another object of the present invention is that of providing a piloting unit able to measure and compensate possible variations in the performances of the vibrator due to settling or ageing of the components during operation of the same, or due to variations in the flow or the characteristics of the product processed.

The object of the present invention is also that of providing a piloting unit able to measure and compensate any variations in the performances of the vibrator due to variations in temperature and also variations in the supply voltage during operation of the same.

A final yet equally important object of the present invention is that of providing a reliable, accurate and also economical piloting unit, thanks to the reduced number of electronic components used, in particular the lack of a specific sensor for determining the width of the oscillations.

These objects are achieved by the piloting unit according to the present invention, preferably of vibration apparatus, of the type comprising means for drawing energy from a source, means for actuating and de-actuating at least one electromagnetic actuator of said apparatus and means for setting the work cycle, and which also comprises means for indirectly identifying the resonance frequency of the apparatus and for maintaining the vibration frequency close to said resonance frequency.

Preferably said means for indirectly identifying the resonance frequency of the apparatus will detect a signal proportional to the amplitude of the vibrating unit of the vibration apparatus.

Preferably said means for indirectly identifying the resonance frequency will obtain the current signal that runs in the one at least electromagnetic actuator.

According to another aspect of the invention, said means for actuating and de-actuating the electromagnetic actuator of said apparatus will comprise a circuit for recycling the energy, substantially of the inductor-capacitor type.

The electromagnetic actuator will preferably be supplied with a voltage below 50V.

Advantageously the piloting unit will be equipped with a limiter of the current that flows in the inductor of the electromagnetic actuator.

Preferably said means for indirectly identifying the resonance frequency of the apparatus and for maintaining the vibration frequency close to said resonance frequency will comprise a microprocessor and will operate preferably according to the following method:

1. the microprocessor performs a variation in the frequency of the vibrations;
2. the piloting unit records a variation in said signal correlated to the amplitude of the vibrating unit measured;
3. if this variation is negative, the new frequency is maintained, going back to point 1; if this variation is positive, the old frequency is maintained, going back to point 1, where however the microprocessor performs a reverse frequency variation.

These and other aspects will be made clearer with the aid of the following description of a preferred embodiment of the invention, to be read by way of a non-limiting example of the more general principle claimed.

The description refers to the accompanying drawings, in which:

Figure 1 is a perspective view of a linear vibration batcher equipped with the control device according to the present invention;

Figure 2 is a blown-up view of the linear vibration batcher of Figure 1;

Figure 3 shows a block diagram of the control device according to the present invention;

Figure 4a is a simplified diagram of the operation of the electronic circuit of the power stage block of Figure 3, during the phase of energisation of the coil;

Figure 4b is the simplified diagram of operation of the electronic circuit of the power stage block of Figure 4, during the phase of de-energisation of the coil; and

Figures 5a, 5b make up the detailed electronic diagram of the current Measurement and signal Conditioning blocks of Figure 3.

Figure 6 shows a flow diagram relating to the method of maintaining the vibration frequency of the device according to the present invention.

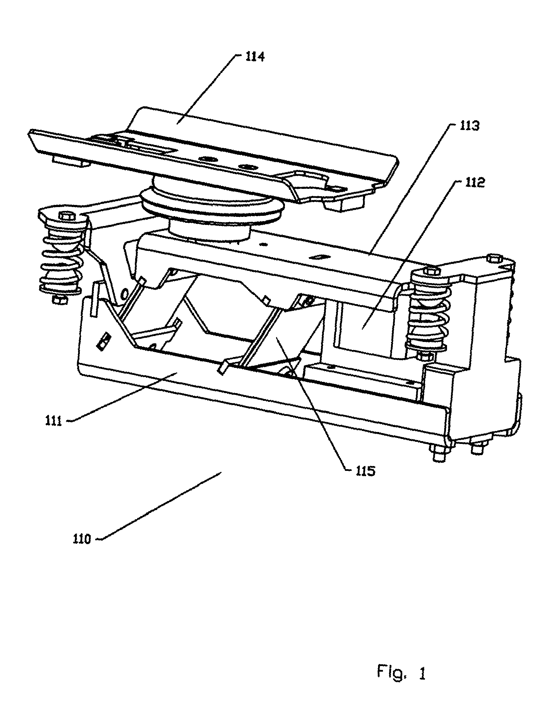

Referring to Figure 1, the linear vibration batcher 110 equipped with the piloting unit according to the present invention is apparatus composed mainly of a lower plate 111, whereto the electromagnet 112 is attached, and an upper plate 113, whereto the vibrating channel 114 is attached, said lower 111 and upper 113 plates being connected one to the other by means of leaf springs 115.

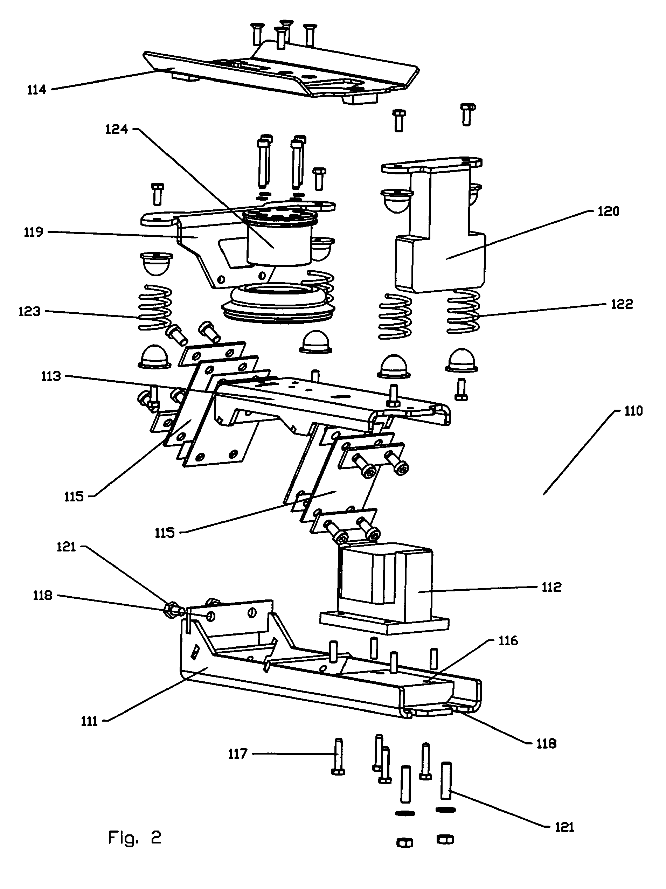

Figure 2 shows the structure of the linear batcher, wherein the lower plate 111 is provided with holes 116 suitable for allowing attachment with screws 117 of the electromagnet 112, and holes 118 for attachment of the front 119 and rear 120 brackets with the screws 121. These brackets 119, 120 are equipped with elastic means, such as a pair of helical springs 122, for mechanical decoupling the linear batcher 110 from the support structure whereon it is mounted. The lower plate 111 and the upper plate 113 are provided with supports for the insertion of the leaf springs 115, which springs form the element of connection between the two plates. The upper plate 113 is equipped with a connection shaft 124, suitable for rigidly connecting said upper plate 113 to the vibrating channel 114.

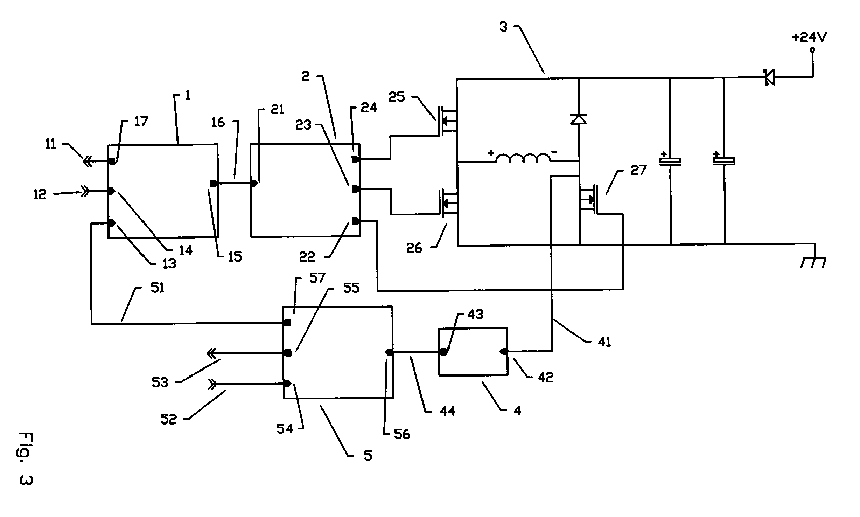

The piloting unit of the linear batcher according to the present invention, with reference to the block diagram illustrated in Figure 3, is formed by a microprocessor, not shown in the drawings, an overcurrent management Logic block 1, a power stage and MOSFET Control block 2, a current Measurement block 4 and a signal Conditioning block 5.

The overcurrent management Logic block 1, in Figure 3, performs the function of interrupting the phase of energisation of the electromagnetic actuator, when the current that flows in the coil of the electromagnetic actuator exceeds the current limit set. This block 1 is placed downstream of the microprocessor, and is equipped with four ports, two input and two output. The first input port 14 receives the signal 12 from the microprocessor, which is a piloting signal generically with square wave and variable work cycle and frequency. The first output port 15 sends a signal 16 to the power stage and MOSFET Control block 2, which is a copy of the piloting signal 12, unless the current limiter intervenes, as will be explained in greater detail herein below. The second input port 13 receives the signal 51 from the signal Conditioning block 5, suitable for causing the stop of the phase of energisation phase when the current that flows in the coil of the electromagnetic actuator exceeds a current limit set. The function of the second output port 17 is to send to the microprocessor the signal 11, which is connected to an interrupt line of the microprocessor and is sent following reception of said signal 51 from the signal Conditioning block 5.

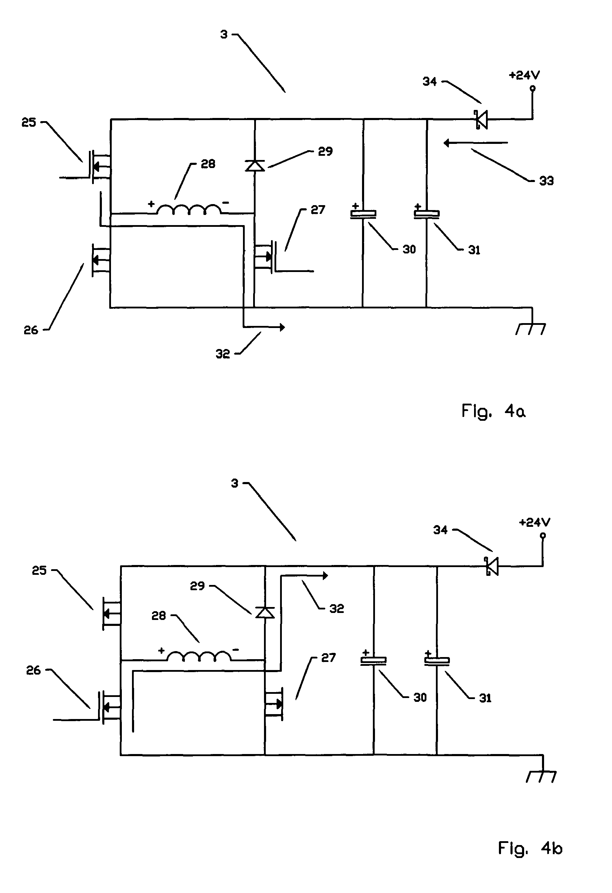

The power stage and MOSFET Control block 2, referring to Figure 3, manages the circuit 3 of the electromagnetic actuator. It is equipped with an input port 21 which receives the signal 16, and three output ports 22, 23 and 24 which command the actuation and de-actuation of the corresponding transistors 25, 26 and 27 at the alternating phases of energisation and de-energisation of the electromagnetic actuator. Said circuit of the electromagnetic actuator 3, as can be seen in detail in Figures 4a and 4b, comprises at least one electromagnetic actuator formed partly by an inductor 28, which inductor 28 is bridge-connected to four switches so that it is possible to present to the inductor 28 both positive and negative voltage. These switches consist of the first diode 29 and of the first, second and third transistors 25, 26 and 27, which in the example illustrated are of the MOSFET type. During the energisation phase, with reference to Figures 3 and 4a, the signal 16 is high and therefore the first and third output ports 22 and 24 of the power stage and MOSFET Control block 2 actuate the first and third MOSFETs 25 and 27, while the second MOSFET 26 remains off. The inductor 28 senses at its terminals positive continuous voltage equal to that present between the armatures of the first and second capacitors 30 and 31. Consequently the current 32 flows in the inductor 28 of the vibrating channel in the direction indicated by the arrow in Figure 4a. This current 32 starts to grow substantially with an exponential saturation trend of the type $A \cdot (1-e^{Kt})$, where the current starts to flow in the energisation phase at the time $t = 0$, $A$ is the maximum limit of the value of the current set, while $K$ is an inherent constant of the electronic circuit with the dimensions of a frequency. During the phase of de-energisation, with reference to Figures 3 and 4b, the signal 16 inputting the block in question is low, the first and third MOSFETs 25 and 27 are off, while the second output port 23 of the power stage and MOSFET Control block 2 actuates the MOSFET 26. During this phase the energy stored on the inductor 28 of the vibrating channel circulates current 32 via the second MOSFET 26 in a reverse direction, as shown by the arrow in Figure 4b. This current 32 charges the armatures of the first and second capacitors 30 and 31, whose common voltage grows beyond the value of the supply voltage. The de-energisation phase, also known as the "recycling phase", lasts sufficient time for said current 32 to be fully exhausted. During this phase the inductor 28 of the vibrating channel senses a negative voltage in relation to that which it sees during the energisation phase. Moreover, thanks to the presence of the first diode 29, the current 32 which flows on the inductor cannot invert its direction. In this way, once the current 32 has been exhausted, the energy previously stored in the inductor is transferred to said capacitors 30 and 31, without losses due to concentrated and distributed dissipative loads. At the start of the successive cycle, when the signal 16 becomes high again, the inductor 28 is first supplied by the first and second capacitors 30 and 31, until the voltage on their armatures drops below the value of the supply voltage, which in the example is +24V. From this time onwards the current 33 is also supplied to the inductor 28 by the feeder via the branch of the circuit provided with a second diode 34, which in the example is a Schottky diode. This second diode 34 serves to prevent said first and second capacitors 30 and 31 from discharging current on the feeder, advantageously limiting absorptions of current by the feeder.

The current Measurement block 4, outlined in Figure 3, is used to acquire, in a non-dissipative manner, a voltage signal proportional to the current which at a certain moment flows through the third MOSFET 27. For this purpose the signal 41 detects the drop in voltage between the drain and source of the third MOSFET 27 when the latter is conducting, that is to say during the phase of energisation of the electromagnetic actuator of the vibrating channel. When the third MOSFET 27 de-actuates, however, the current 32 no longer flows there, since the inductor 28 senses a negative voltage, and therefore said detection signal 41 zeroes. The current Measurement block 4 has an input port 42 and an output port 43. Said detection signal 41 reaches the block 4 via the input port 42, and transfers a signal 44 proportional to the current, which flows in the inductor 28, from the output port 43 to the successive signal Conditioning block 5.

The signal Conditioning block 5 is placed between the current Measurement block 4 and the microprocessor, from which it receives an input signal 52, and to which it sends an output signal 53. Said signal 52 comes from a digital-to-analog converter DAC of the microprocessor, and serves to provide the maximum value which the current can reach on the inductor 28 of the electromagnetic actuator of the vibrating channel. This signal is received from a first input port 54 of the signal Conditioning block 5. Said output signal 53 is an analog signal proportional to the amplitude which the mobile unit of the vibrating channel has at that specific moment in relation to the fixed unit. As will be explained in greater detail herein below, this signal 53 is based on the extent of the variation of the current 32 which flows on the inductor 28 in the unit of time, and is associated with a first output port 55 of the signal Conditioning block 5. The value of this signal detected at the end of the energisation phase is maintained by a "sample and hold", so as to be correctly acquired by the DAC of the microprocessor during the subsequent de-energisation phase. Again in Figure 3, the signal Conditioning block 5 also has a second input port 56, which receives the signal 44 in output from the current Measurement block 4, and a second output port 57, which sends the signal 51 to the overcurrent management Logic block 1. The signal Conditioning block 5 performs a dual function: above all it constantly monitors the growth of the current signal which traverses the inductor 28 of the electromagnetic actuator of the vibrating channel, during the phase of energisation of the electromagnetic actuator, comparing it with the limit value supplied by the microprocessor via the aforementioned input signal 52. If the value of the current 32 which flows in the inductor 28 and in the MOSFET 27 exceeds this limit, the signal Conditioning block 5 sends the signal 51 to the overcurrent management Logic block 1, which in this case shortens the phase of energisation so as to cause a drop in the current 32 on the electromagnetic actuator. This occurs since the overcurrent management Logic block 1, once the signal 51 has been received, reacts by zeroing the output signal 16, and informs the microprocessor of the stop occurring via the output signal 11. Secondly the signal Conditioning block 5 supplies a signal 53 proportional to the prime derivative in relation to the time of the current that runs on the inductor 28 during the energisation phase, this value being essential for understanding whether the whole mechanical system is vibrating at a frequency close to its natural resonance frequency.

A practical embodiment of the current Measurement 4 and signal Conditioning 5 blocks will now be described by way of an example.

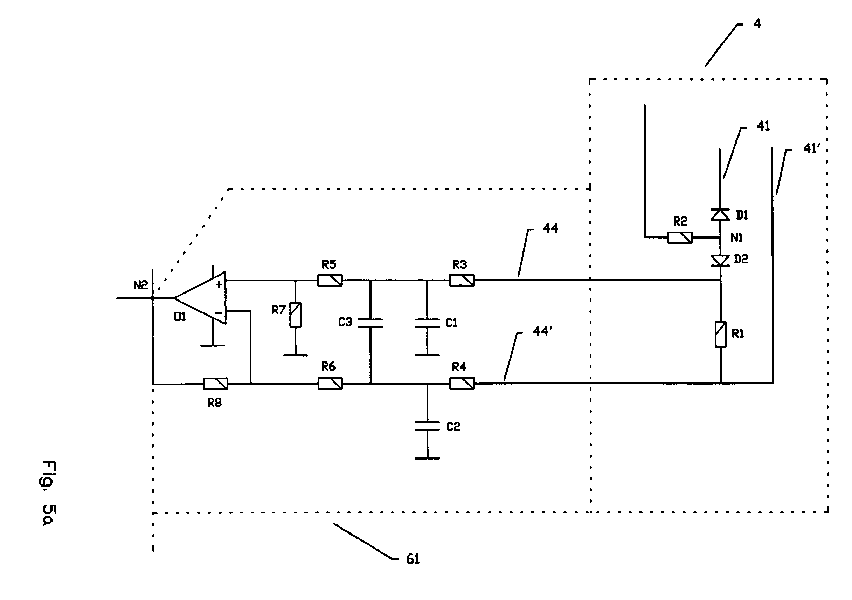

Referring to Figure 5a, the lines 41 and 41' acquire the voltage signal between drain and source of the MOSFET 27, not shown in the drawing, which discharges on the resistor R1. The diodes D1 and D2, placed symmetrically in relation to the node N1, serve to balance the voltage signal acquired during the phase of energisation of the electromagnetic actuator, and to present to the same resistor R1 a voltage equal to zero during the phase of de-energisation. The lines 44 and 44' transfer the voltage signal acquired in this way to the sub-block 61. This sub-block 61 is a voltage signal amplification stage which comprises the operational amplifier O1 in a non-inverting configuration, whose gain G comes from the value

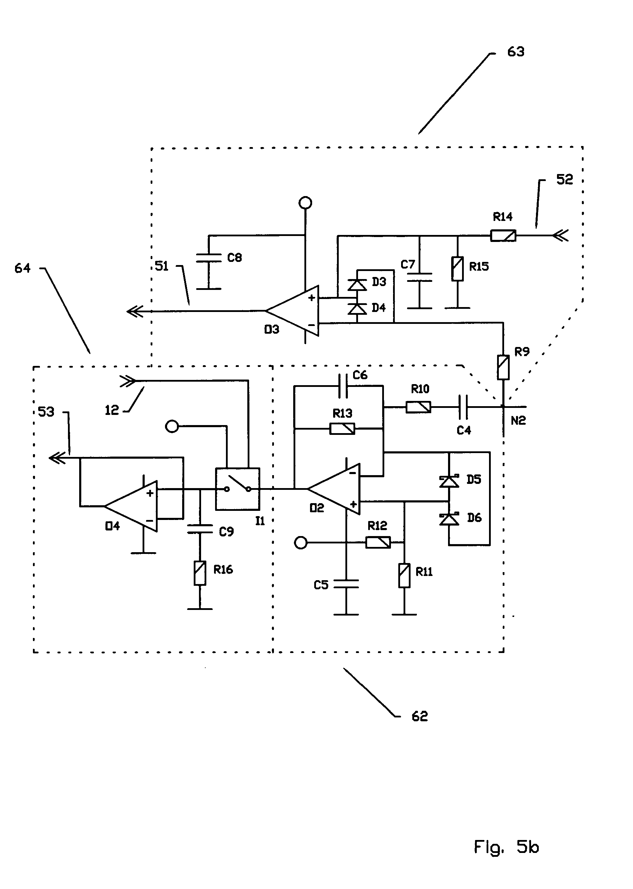

$$G = \frac{R8}{R6 + R4}$$ . This stage is designed to filter the low frequencies, and is equipped for the purpose with a low-pass filter, consisting of the capacitance C3 of differential mode and by the capacitances C1 and C2 of common mode, and appropriate resistors R3, R5 and R7. Referring to Figure 5b, the voltage signal in output from the operational amplifier O1, present on the node N2, is acquired by the sub-block 62, comprising a shunt stage, and by the sub-block 63, comprising a comparator stage for the control of the value of the current. At the input of the sub-block 63, in fact, said voltage acquired at the node N2 is detected at the negative terminal of the operational amplifier O3. The signal 52, coming directly from the microprocessor, determines, as mentioned previously, the maximum value of current that can flow on the inductor. This signal is filtered by a low-pass filter consisting of the capacitance C7 and the resistors R14 and R15, and is detected at the positive terminal of the operational amplifier O1. As soon as the signal on the negative terminal becomes greater than the signal on the positive terminal, i.e. the difference of the two signals becomes positive, the operational amplifier O1 actuates and sends the signal 51 to the overcurrent management Logic block 1, not shown in the drawing, which therefore stops the energisation phase. The diodes D3 and D4, in series, form a protection against overvoltages for the operational amplifier O3, so that the difference between the signals of voltage at the terminals does not exceed the indicative value of 1V. The same voltage at the node N2 is acquired at the input of the sub-block 62, comprising the shunt stage. This shunting of the signal is carried out by means of the operational amplifier O2 in inverting configuration, and by the capacitance C4 in series with the resistor R13. This operational amplifier O2 is equipped with a band-pass filter and is supplied, like all the others, at the voltage of 5V. The band-pass filter is such as to provide on the Bode diagram a function whose derivative curve comprises the frequencies below 1 KHz, so as to involve the entire useful spectrum. The voltage divider formed by means of the resistors R11 and R12 means that the voltage in output from the operational amplifier O2 is positive and equal to: $V(t) = V_0 - K\dfrac{di(t)}{dt}$ .

This voltage is acquired in input at the sub-block 64, comprising the sample and hold stage. This stage comprises in turn the switch I1, which closes during the energisation phase and opens during the de-energisation phase. This opening and closure is commanded by a shunt of the piloting signal 12, coming from the microprocessor and not shown in the drawing. During the energisation phase the voltage signal traverses the switch I1 and enters the operational amplifier O4, set in a configuration of tracker of non-inverting voltage. The function of this latter operational amplifier O4 is that of forming an output buffer of the sub-block, and sending the signal 53 directly to the microprocessor. During the phase of de-energisation, the switch I1 opens and the voltage value that has charged the capacitor C9 is maintained to allow its measurement without the capacitor C9 being able to discharge, since it senses an infinite impedance at the input of the operational amplifier O4.

Evaluation of the value of the prime derivative of the current in relation to time is essential for succeeding in determining the inductance of the coil of the electromagnetic actuator, which is closely linked to the distance between the fixed part and the mobile part of the vibrator. In fact, referring to the total section of the gap as S, the total reluctance of the magnetic circuit is approximately that due to the distance d between the fixed part and the mobile part of the vibrator:

$$R_{TOT} \approx R_{ARIA} = \frac{!}{\mu_0 \mu_{ARIA}} \cdot \frac{d}{S}.$$ This means that the inductance of the circuit is obtained from the following formula: $L = \frac{N^2}{R_{TOT}} = \mu_0 \mu_{ARIA} \cdot \frac{N^2 S}{d}.$ In other words, the smaller the gap d, the greater the inductance of the circuit will be. Measuring the inductance therefore allows a valuation of the width of the oscillations by the vibrating channel in relation to the base. To obtain a correct measurement of the width of the oscillations, the most suitable time for measurement is the end of the phase of energisation of the electromagnetic actuator, i.e. when the gap is smaller and the inductance is greatest. The value of the inductance can also be measured indirectly, valuating the wave form of the current that circulates on the inductor itself. As a rough approximation, considering as constant the voltage with which the vibrator is supplied, and considering as negligible the inductance variations, it can be assumed that the current variation is proportional to the voltage V with which the vibrator is supplied: $V = L \cdot \frac{di(t)}{dt}.$ It is clear from this formula that, given a measurement of the variation of the current, it is possible to obtain an estimate of the inductance of the circuit. More particularly, for this application, it is important to valuate when the gap is minimal and the amplitude is maximum, a condition that occurs when the variation in the current in the unit of time is minimal:

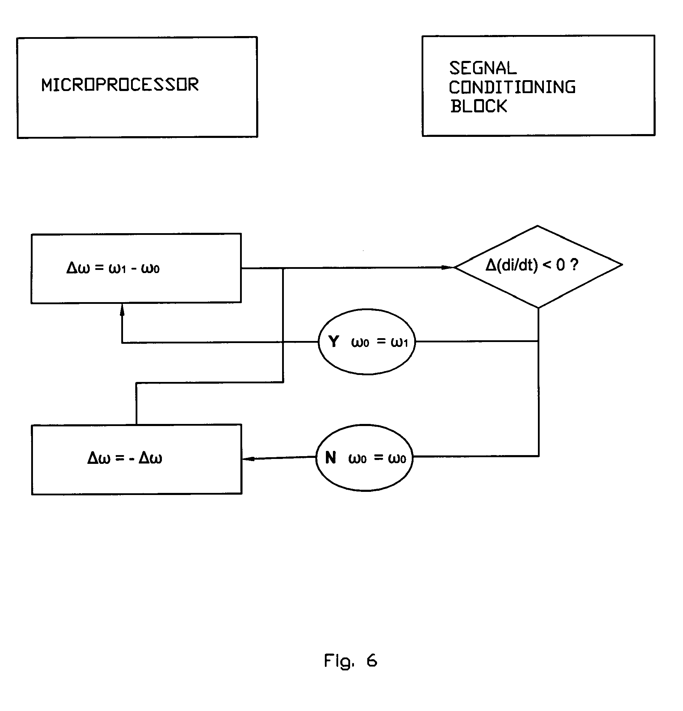

$$\frac{di(t)}{dt} = \frac{Vd}{\mu_0 \mu_{ARIA} N^2 S}.$$ The simplifying hypotheses as to the constancy of the voltage and of the inductance can be considered acceptable, given that the measurement of the di/dt term is taken at the end of the term of actuation of the electromagnetic actuator, and therefore in a given moment of time. When the di/dt term decreases, therefore, the electronic card described is designed in such a way that the signal 53 of the signal Conditioning block 5 grows. It is clear from the description above that there is no need for any accelerometer sensor mounted on board the mobile unit of the vibrator that measures the effective amplitude in relation to the fixed part. Measurement of the di/dt term at different frequencies of the wave form allows the inherent oscillation of the mechanical system, which maximises the amplitude of the vibrating part, to always be established. The microprocessor of the control device according to the present invention, not shown in the drawings, is able to perform in a known manner checks on the vibration frequency value, so as to vibrate the linear batcher around the resonance frequency that maximises the width of the oscillations. This check follows the logical outline shown in Figure 6: the microprocessor decides at a certain moment on an increase (decrease) of the frequency of the vibrations $\Delta\omega = \omega_1 - \omega_0$. At this point the piloting unit, in particular said signal Conditioning block, records a variation in the signal proportional to the derivative in relation to the time of the current measured $\Delta(K \frac{di(t)}{dt}).$ If

this variation is negative it means that, given what is stated above, the width of the oscillations has increased and therefore the new frequency is "better", and therefore $\omega = \omega_1$. In this case the microprocessor performs a new increase (decrease) of the vibration frequency. If instead

the variation $\Delta(K \frac{di(t)}{dt})$ is positive, it means that the width of the oscillation has decreased, and therefore the new frequency is less good and therefore $\omega = \omega_0$. In this case, therefore, the microprocessor performs a new decrease (increase) of the frequency $\omega_0$ of vibration. When the microprocessor finds such a frequency that the width of oscillation is maximum, then it maintains this frequency as operative. This check, according to the method described above, is performed by the piloting unit, the object of the present invention, whenever further calibration of the apparatus is required, but it could also be performed automatically during operation to balance all the possible variations of the resonance frequency, irrespective of the cause.

The microprocessor of the electronic card is also able to perform a variation of the width of the oscillations, irrespective of the frequency of the vibrations. A reduction in this width could, in principle, be obtained via a variation in the frequency of vibration. This variation would however jeopardise operation at maximum efficiency of the vibration apparatus, a maximum efficiency that is only achieved with the maintaining of the vibration frequency equal to the resonance frequency of the system, which is in fact the primary object of the present invention. The microprocessor instead guarantees the possibility of varying the width of the oscillations by the variation of the duty cycle, i.e. the extension or the reduction of the partial time of the energisation phase in relation to the total period which, clearly, has to remain constant and inverse to the resonance frequency. This variation of the time of the energisation phase is obtained via a modulation of the width of the pulses (PWM) of the microprocessor. If the duration of the energisation phase is such as to make the current reach saturation level, then the control device according to the present invention automatically stops the energisation phase. The duty cycle, in any case, will never be higher than 65% approximately of the period to allow the inductor to discharge the energy onto the capacitors during the de-energisation phase.

Obviously the electronic circuit described serves to exemplify a possible embodiment of the invention, and variations in the number or type of the components do not entail a departure from the scope of protection as claimed hereinunder.

**Claims**

1. Piloting unit, preferably but not exclusively aimed at actuating vibration apparatus (110), of the type comprising means for acquiring energy from a source, means (2) for actuating and de-actuating at least one electromagnetic actuator (112) of said apparatus (110) and means for setting the work cycle, **characterised in that** it also comprises means (5) for indirectly identifying the resonance frequency of the apparatus (110) and for maintaining the vibration frequency close to said resonance frequency.

2. Piloting unit according to claim 1, wherein said means (5) for indirectly identifying the resonance frequency of the apparatus produce a signal proportional to the amplitude of the vibrating unit of the vibration apparatus (110).

3. Piloting unit according to the previous claims, wherein said means (5) acquire the current signal which flows in the one at least electromagnetic actuator (112) at the end of the phase of energisation of said electromagnetic actuator (112).

4. Piloting unit according to claim 1, wherein the means (2) for actuating and de-actuating at least one electromagnetic actuator comprise a circuit (3) equipped with an inductor (28) bridge-connected to four switches (25, 26, 27, 29).

5. Piloting unit according to claim 4, wherein said four switches are a diode (29) and a first, second and third transistor (25, 26, 27).

6. Piloting unit according to claim 5, wherein said first, second and third transistors (25, 26, 27) are of the MOSFET type.

7. Piloting unit according to the previous claims, wherein the means (5) for indirectly identifying the resonance frequency of the apparatus measure the drop in voltage between the drain and source of the third MOSFET (27) of said circuit, during the phase of energisation of the one at least electromagnetic actuator (112) of the vibrating channel (114).

8. Piloting unit according to the previous claims, wherein said means (5) for indirectly identifying the resonance frequency of the apparatus comprise a stage of shunting of said signal, which produces a signal proportional to the derivative in relation to the time of the current (32) that flows in the inductor (28).

9. Piloting unit according to the previous claims, wherein said shunt is performed by means of an operational amplifier (02) in inverting configuration, provided with at least one capacitor (C4) in series with a resistor (R13) on the negative terminal, and a band-pass filter, such as to provide on the Bode diagram a function whose derivative curve comprises the frequencies below at least 1 KHz.

10. Piloting unit according to claim 1, wherein the means (2) for actuating and de-actuating at least one electromagnetic actuator (112) of said apparatus comprise a circuit for the recycling of the energy, substantially of the inductor-capacitor type.

11. Piloting unit according to claim 10, wherein the circuit for the recycling of energy comprises at least one capacitor (30, 31) which partially supplies the inductor during the phase of energisation of the one at least electromagnetic actuator (112), whereas it is charged by the same inductor (28) up to a voltage higher than the supply voltage during the phase of de-energisation of the one at least electromagnetic actuator (112).

12. Piloting unit according to the previous claims, wherein the one at least electromagnetic actuator (112) is supplied with a voltage below 50V.

13. Piloting unit according to the previous claims, wherein a limiter of the current (32) that flows in the inductor (28) is present.

**14.** Piloting unit according to claim 14, wherein said limiter comprises an operational amplifier (01) that sends a signal (51) for stopping the phase of energisation, when the signal of the current (32) that flows in the inductor (28) is greater than the signal relating to the current limit (52).

**15.** Piloting unit according to the previous claims, wherein the means (5) for indirectly identifying the resonance frequency of the vibration apparatus comprise a sample and hold device, suitable for maintaining, during the phase of de-energisation of the electromagnetic actuator, the voltage value recorded during the phase of energisation of the electromagnetic actuator (112).

**16.** Piloting unit according to the previous claims, wherein the means (5) for indirectly identifying the resonance frequency of the apparatus (110) and for maintaining the vibration frequency close to said resonance frequency comprise a microprocessor.

**17.** Piloting unit according to the previous claims, wherein said microprocessor performs variations of the frequency of the work cycle.

**18.** Piloting unit according to the previous claims, wherein the microprocessor performs a variation of the time of the phase of energisation via a modulation of the width of the pulses (PWM).

**19.** Vibration apparatus (110) of the type equipped with a lower plate (111), whereto the electromagnetic actuator (112) is attached, and an upper plate (113), whereto the vibrating channel (114) is attached, said lower and upper plates (111, 113) being connected one to the other by means of leaf springs (122), **characterised in that** it is provided with a piloting unit according to claims 1 to 19.

**20.** Method for maintaining the vibration frequency close to the resonance frequency of the vibration apparatus equipped with a piloting unit according to the previous claims, **characterised by** the following steps:

1. the microprocessor performs a variation of the frequency of the vibrations $\Delta\omega = \omega_1 - \omega_0$;

2. the piloting unit records a variation of the signal $\Delta(K\dfrac{di(t)}{dt})$ acquired;

3. If $\Delta(K\dfrac{di(t)}{dt}) < 0$, then $\omega = \omega_1$ going back to point 1, while if $\Delta(K\dfrac{di(t)}{dt}) > 0$, then $\omega = \omega_0$ and going back to point 1 where the microprocessor performs an opposite variation.

Fig. 1

Fig. 2

Fig. 3

Fig. 4a

Fig. 4b

Fig. 5a

Fig. 5b

MICROPROCESSOR

SEGNAL
CONDITIONING
BLOCK

$\Delta\omega = \omega_1 - \omega_0$

$\Delta(di/dt) < 0$ ?

**Y** $\omega_0 = \omega_1$

$\Delta\omega = -\Delta\omega$

**N** $\omega_0 = \omega_0$

Fig. 6

**European Patent Office**

**EUROPEAN SEARCH REPORT**

Application Number

EP 06 00 9724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/23248 A (POUL JOHANSEN DEV A S [DK]; MADSEN NIELS BENT HEEGAARD [DK]; CHRISTENS) 1 August 1996 (1996-08-01) * page 7, lines 17-30; figures 1,5 * * page 10, lines 23-31 * | 1 | INV. H02P25/02 G05D19/02 B65G27/32 H02M7/525 |
| X | * page 8, lines 5-10 * | 2 | |
| X | * page 12, lines 9-11; figure 5 * | 3 | |
| X | * page 7, line 20 * | 4 | |
| X | * figure 5 * | 5-7 | |
| Y | * figures 2,3,5,6B * | 8-14 | |
| X | * page 10, lines 14-26; figure 5 * | 15-18 | |
| X | * page 1, lines 4-12; figure 1 * | 19 | |
| A | * figures 3,6A,6B * | 20 | |
| X | EP 0 629 568 A (YKK CORP [JP]) 21 December 1994 (1994-12-21) * page 10, lines 46-58; figures 2,12 * | 1 | |
| Y | * figures 4-6 * | 8-14 | |
| X | US 5 074 403 A (MYHRE JOHN [US]) 24 December 1991 (1991-12-24) * column 2, lines 5-15; figures 3,7,8A,B * * column 3, lines 51-58 * | 1 | TECHNICAL FIELDS SEARCHED (IPC) H02P G05D B65G H02M |
| Y | * column 9, lines 6-41; figures 3-6 * | 8-14 | |
| X | US 5 080 218 A (IZUME TAKATOMO [JP] ET AL) 14 January 1992 (1992-01-14) * column 6, line 61 - column 7, line 14; figures 1,8,11,12 * | 1 | |
| Y | * figures 13,14 * | 8-14 | |

The present search report has been drawn up for all claims

| Place of search | Date of completion of the search | Examiner |
|---|---|---|
| Munich | 27 October 2006 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 9724

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| WO 9623248 | A | 01-08-1996 | AT | 177853 T | 15-04-1999 |
| | | | AU | 4431996 A | 14-08-1996 |
| | | | CA | 2210397 A1 | 01-08-1996 |
| | | | DE | 69601783 D1 | 22-04-1999 |
| | | | DE | 69601783 T2 | 02-12-1999 |
| | | | DK | 0805999 T3 | 11-10-1999 |
| | | | EP | 0805999 A1 | 12-11-1997 |
| | | | ES | 2130779 T3 | 01-07-1999 |
| | | | JP | 10513586 T | 22-12-1998 |
| | | | US | 5931285 A | 03-08-1999 |
| EP 0629568 | A | 21-12-1994 | DE | 69407219 D1 | 22-01-1998 |
| | | | DE | 69407219 T2 | 09-07-1998 |
| | | | US | 5472079 A | 05-12-1995 |
| US 5074403 | A | 24-12-1991 | NONE | | |
| US 5080218 | A | 14-01-1992 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4441060 A